**Europäisches Patentamt**

**European Patent Office**

**Office européen des brevets**

(11) Veröffentlichungsnummer: **0 324 961**

**A1**

(12) **EUROPÄISCHE PATENTANMELDUNG**

(21) Anmeldenummer: **88121334.2**

(22) Anmeldetag: **21.12.88**

(51) Int. Cl.4: **G01F 1/68 , G01P 5/12**

(30) Priorität: **16.01.88 DE 3801165**
**12.11.88 DE 3838466**

(43) Veröffentlichungstag der Anmeldung:
**26.07.89 Patentblatt 89/30**

(84) Benannte Vertragsstaaten:
**DE FR GB IT**

(71) Anmelder: **ROBERT BOSCH GMBH**
**Postfach 10 60 50**
**D-7000 Stuttgart 10(DE)**

(72) Erfinder: **Gneiss, Heinz**
**August-Bebel-strasse 2**
**D-7140 Ludwigsburg(DE)**
Erfinder: **Kienzle, Wolfgang, Dipl.-Ing,**
**Schlossgartenstrasse 18**
**D-7254 Hemmingen(DE)**
Erfinder: **Sauer, Rudolf, Dr. Dipl.-Ing,**
**Auf der Lug 3**
**D-7141 Benningen(DE)**
Erfinder: **Wuensch, Werner, Ing.(grad.)**
**Kreuzgarten 15**
**D-7145 Unterriexingen(DE)**

(54) **Luftmassenmessvorrichtung und Verfahren zur Herstellung einer Luftmassenmessvorrichtung.**

(57) Bei der Anwendung einer Luftmassenmeßvorrichtung im Ansaugrohr von Brennkraftmaschinen, die in der Regel einen plattenförmigen Trägerkörper mit wenigstens einer darauf angeordneten Widerstandsschicht aufweist, ergibt sich das Problem von Schmutzablagerungen an der der Strömung entgegengerichteten Stirnfläche des Trägerkörpers, wodurch sich gegenüber dem geichten Neuzustand der Luftmassenmeßvorrichtung unerwünschte Änderungen der Kennlinie ergeben. Die neue Ausgestaltung der Luftmassenmeßvorrichtung soll eine praxisbezogenere Eichung ermöglichen.

Um bereits im Neuzustand den Effekt einer im Betrieb auftretenden Langzeitverschmutzung am Trägerkörper (18) einer Luftmassenmeßvorrichtung zu erzeugen, ist an der der Strömung (2) entgegengerichteten Stirnfläche (19) des Trägerkörpers (18) ein Vorkörper (23) angeordnet, der beispielsweise U-förmig ausgebildet sein kann. Durch den Vorkörper (23) wird bereits im Neuzustand der Luftmassenmeßvorrichtung ein Verschmutzungseffekt vorgetäuscht, der bei der Eichung mitberücksichtigt wird. Der Vorkörper (23) kann aus elektrisch-leitendem Kunststoff bzw. Lack bestehen und mit einer Masseleitung (15) verbunden sein.

Die Luftmassenmeßvorrichtung eignet sich ganz allgemein zur Messung strömender Medien.

FIG. 2

## Luftmassenmeßvorrichtung und Verfahren zur Herstellung einer Luftmassenmeßvorrichtung

Stand der Technik

Die Erfindung geht aus von einer Luftmassenmeßvorrichtung nach der Gattung des Anspruches 1 bzw. des Anspruches 8. Es ist schon eine Luftmassenmeßvorrichtung bekannt, bei der zur Vermeidung von Ablagerungen der in der Luft schwebenden Partikel am Trägerkörper die der Strömungsrichtung entgegengerichteten Flächen möglichst klein und möglichst abgerundet sind, um die Menge der sich während des Betriebes der Luftmassenmeßvorrichtung dort ansammelnden Ablagerungen möglichst gering zu halten. Derartige Ablagerungen führen nicht nur zu einer Beeinflussung des Strömungsverlaufes im Bereich des Trägerkörpers, sondern auch zu einem schlechteren thermischen Verhalten der Luftmassenmeßvorrichtung, da die Ablagerungen zu einer größeren thermischen Trägheit der Luftmassenmeßvorrichtung führen, denn infolge der Ablagerungen am Trägerkörper ergibt sich eine Verzögerung in der Meßgeschwindigkeit bei sich ändernder Luftmasse. Auch die bei der bekannten Luftmassenmeßvorrichtung angewandten Maßnahmen können derartige Ablagerungen auf lange Sicht nicht verhindern, wodurch in der beschriebenen Weise eine unerwünschte Änderung der Kennlinie der Luftmassenmeßvorrichtung auftritt.

Vorteile der Erfindung

Die erfindungsgemäße Luftmassenmeßvorrichtung mit den kennzeichnenden Merkmalen des Anspruches 1 bzw. das Verfahren mit den kennzeichnenden Merkmalen des Anspruches 8 haben demgegenüber den Vorteil, daß bereits im Neuzustand der Luftmassenmeßvorrichtung durch den Vorkörper ein Effekt erzeugt wird, der etwa einer praxisbezogenen Langzeitverschmutzung entspricht und damit bereits bei der Eichung der Luftmassenmeßvorrichtung mitberücksichtigt wird. Während der Benutzung der Luftmassenmeßvorrichtung sich dann noch an dem Vorkörper bildende Ablagerungen bewirken dann nur noch vernachlässigbar geringe Beeinflussungen auf die Kennlinie der Luftmassenmeßvorrichtung. Das Eintauchen der der Strömung entgegengerichteten Stirnfläche des Trägerkörpers in eine flüssige Kunststoff- bzw. Lackmasse ermöglicht eine besonders kostengünstige und einfache Herstellung eines tropfenförmigen und damit stromlinienförmigen Vorkörpers.

Durch die in den Unteransprüchen aufgeführten Maßnahmen sind vorteilhafte Weiterbildungen und Verbesserungen der im Anspruch 1 angegebenen Luftmassenmeßvorrichtung bzw. des im Anspruch 8 angegebenen Verfahrens möglich.

Vorteilhaft ist es, den Vorkörper U-förmig auszubilden und mit seinen Schenkeln über den Trägerkörper zu schieben und zu befestigen.

Vorteilhaft ist es ebenfalls, den Vorkörper aus Blech oder Kunststoff bzw. Lack auszubilden.

Um eine elektrostatische Aufladung des Kunststoff- bzw. Lack-Vorkörpers zu vermeiden, ist dieser vorteilhafterweise aus elektrisch leitendem Kunststoff bzw. Lack hergestellt.

Weiterhin vorteilhaft ist es, den aus elektrisch leitendem Kunststoff bzw. Lack hergestellten Vorkörper mit einer elektrischen Masseleitung zu verbinden.

Zeichnung

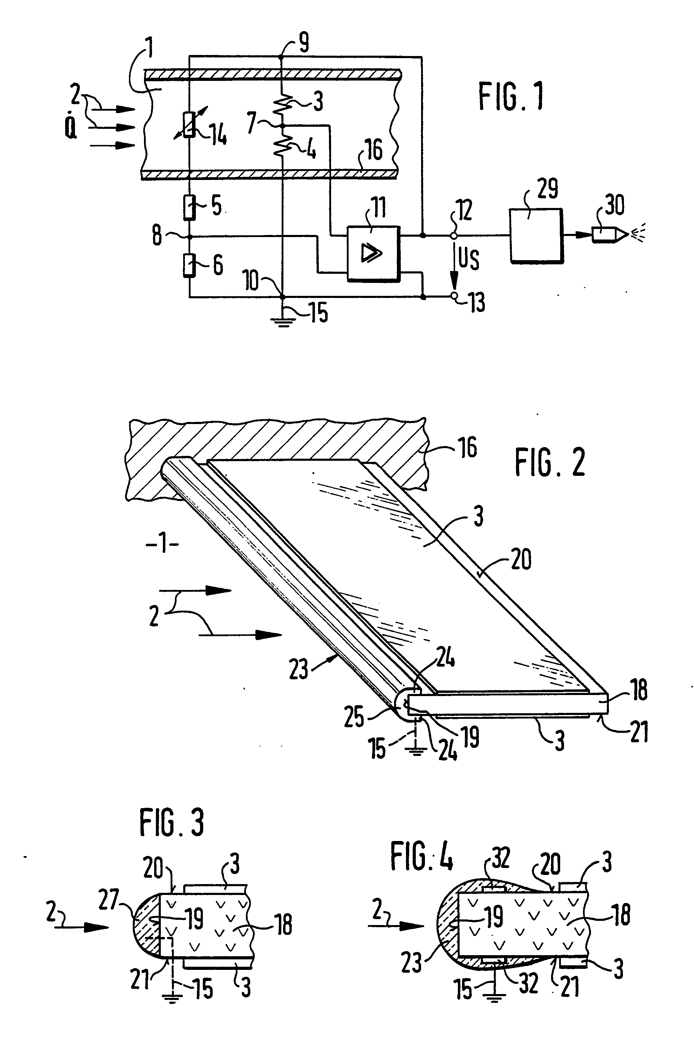

Ausführungsbeispiele der Erfindung sind in der Zeichnung vereinfacht dargestellt und in der nachfolgenden Beschreibung näher erläutert. Es zeigen Figur 1 eine schaltungsmäßige Darstellung einer Luftmassenmeßvorrichtung, Figur 2 bis 4 je ein Ausführungsbeispiel einer Luftmassenmeßvorrichtung in Teildarstellung.

Beschreibung der Ausführungsbeispiele

In der Figur 1 ist mit 1 ein Strömungsquerschnitt, beispielsweise ein Luftansaugrohr einer nicht dargestellten Brennkraftmaschine, gezeigt, durch welchen in Richtung der Pfeile 2 ein Medium, beispielsweise die von der Brennkraftmaschine angesaugte Luft strömt. In dem Strömungsquerschnitt 1 befindet sich beispielsweise als Teil einer Luftmassenmeßvorrichtung ein temperaturabhängiger Meßwiderstand 3, z.B. ein Heißfilm, der von der Ausgangsgröße eines Reglers durchflossen wird und gleichzeitig die Eingangsgröße für den Regler liefert. Die Temperatur des temperaturabhängigen Meßwiderstandes 3 wird von dem Regler auf einen festen Wert, der über der mittleren Lufttemperatur liegt, eingeregelt. Nimmt nun die Strömungsgeschwindigkeit, d.h. die pro Zeiteinheit fließende Luftmasse mit einem Durchflußwert $\dot{Q}$ zu, so kühlt sich der temperaturabhängige Meßwiderstand 3 stärker ab. Diese Abkühlung wird an den Eingang des Reglers zurückgemeldet, so daß dieser seine Ausgangsgröße so erhöht, daß sich wiederum der festgelegte Temperaturwert an dem temperaturabhängigen Meßwiderstand 3 einstellt. Die Ausgangsgröße des Reglers regelt die Temperatur des temperaturabhängigen Meßwiderstandes 3 bei Änderung des Durchflußwertes $\dot{Q}$ der Luft jeweils auf den vorbestimmten Wert ein und stellt gleichzeitig ein Maß für die strömende Luftmasse dar, das als Durchflußmeßwert $U_S$ beispielsweise einem Zumeßkreis einer Brennkraftmaschine zur Anpassung der erforderlichen Kraftstoffmasse an die pro Zeiteinheit angesaugte Luftmasse zugeführt werden kann.

Der temperaturabhängige Meßwiderstand 3 ist in einer Widerstandsmeßschaltung, beispielsweise einer Brückenschaltung, angeordnet und bildet mit einem Referenzwiderstand 4 zusammen einen ersten Brückenzweig, dem ein aus den beiden festen Widerständen 5 und 6 aufgebauter zweiter Brückenzweig parallel geschaltet ist. Zwischen den Widerständen 3 und 4 befindet sich ein Abgriffspunkt 7 und zwischen den Widerständen 5 und 6 ein Abgriffspunkt 8. Die beiden Brückenzweige sind in den Punkten 9 und 10 parallel geschaltet. Die zwischen den Punkten 7 und 8 auftretende Diagonalspannung der Brücke wird dem Eingang eines Verstärkers 11 zugeleitet, an dessen Ausgangsklemmen die Punkte 9 und 10 angeschlossen sind, so daß seine Ausgangsgröße die Brücke mit Betriebsspannung bzw. mit Betriebsstrom versorgt. Der gleichzeitig als Stellgröße dienende Durchflußmeßwert $U_S$ ist zwischen Klemmen 12 und 13 abnehmbar, wie angedeutet.

Der temperaturabhängige Meßwiderstand 3 wird durch den ihn durchfließenden Strom bis zu einem Wert, bei dem die Eingangsspannung des Verstärkers 11, die Brückendiagonalspannung, Null wird oder einen vorgegebenen Wert annimmt, aufgeheizt. Aus dem Ausgang des Verstärkers 11 fließt dabei ein bestimmter Strom in die Brückenschaltung. Verändert sich infolge von Massenänderungen $\dot{Q}$ der strömenden Luft die Temperatur des temperaturabhängigen Meßwiderstandes 3, so ändert sich die Spannung an der Brückendiagonale, und der Verstärker 11 regelt die Brückenspeisespannung bzw. den Brückenstrom auf einen Wert, für den die Brücke wieder abgeglichen oder in vorgegebener Weise verstimmt ist. Die Ausgangsgröße des Verstärkers 11, die Stellgröße $U_S$, stellt ebenso wie der Strom im temperaturabhängigen Meßwiderstand 3 einen Durchflußmeßwert für die strömende Luftmasse dar, bei spielsweise der von einer Brennkraftmaschine angesaugten Luftmasse und kann einem elektronischen Steuergerät 29 eingegeben werden, das beispielsweise mindestens ein Kraftstoffeinspritzventil 30 ansteuert.

Zur Kompensation des Einflusses der Temperatur der Luft auf das Meßergebnis kann es zweckmäßig sein, einen von der Luft umströmten zweiten temperaturabhängigen Kompensationswiderstand 14 in den zweiten Brückenzweig zu schalten. Dabei ist die Größe der Widerstände 5, 6 und 14 so zu wählen, daß die Verlustleistung des temperaturabhängigen Kompensationswiderstandes 14, die durch den ihn durchfließenden Zweigstrom erzeugt wird, so gering ist, daß sich die Temperatur des Kompensationswiderstandes 14 praktisch nicht mit den Änderungen der Brückenspannung verändert, sondern stets der Temperatur der vorbeiströmenden Luft entspricht. Der Referenzwiderstand 4 ist zweckmäßigerweise ebenfalls in dem Strömungsquerschnitt 1 oder in wärmeleitender Verbindung zur den Strömungskanalquerschnitt begrenzenden Wandung 16 des Luftansaugrohres angeordnet, so daß die Verlustwärme des Referenzwiderstandes 4 durch die strömende Luft oder die Wandung 16 abgeführt werden kann. Beispielsweise mit dem Punkt 10 ist eine elektrische Masseleitung 15 verbunden.

Bei dem in Figur 2 in Teildarstellung und unmaßstäblich dargestellten Ausführungsbeispiel einer Luftmassenmeßvorrichtung ist an der Wandung 16 des den Strömungsquerschnitt 1 begrenzenden Luftansaugrohres ein Trägerkörper (Substrat) 18 angeordnet, der plattenförmig ausgebildet ist und sowohl in Strömungsrichtung 2 der Luft als auch quer zur Strömungsrichtung einen rechteckförmigen Querschnitt hat. Der Trägerkörper 18 kann aus elektrisch isolierendem Material wie beispielsweise Keramik bestehen, oder aus einem elektrisch leitenden Material, und ist dann mit einer nicht dargestellten elektrisch isolierenden Schicht überzogen. Der sich quer zur Strömungsrichtung 2 in den Strömungsquerschnitt erstreckende Trägerkörper 18 hat der Strömung entgegengerichtet eine im Querschnitt rechteckförmige Stirnfläche 19 und nahezu parallel zur Strömungsrichtung verlaufend eine obere Seitenfläche 20 und eine untere Seitenfläche 21. Mindestens auf einer der Seitenflächen 20, 21 ist der als Schicht ausgebildete Meßwiderstand 3 angeordnet. Der Meßwiderstand 3 kann auch in der dargestellten Weise auf den beiden Seitenflächen 20, 21 angeordnet sein, es kann sich dabei jedoch auch um unterschiedliche Widerstandsschichten, beispielsweise der Brücke handeln. An der der Strömungsrichtung 2 entgegengerichteten Stirnfläche 19 des Trägerkörpers 18 ist ein Vorkörper 23 angeordnet, der mit geringer Wandstärke von wenigen zehntel Millimeter bis etwa ein Millimeter ausgebildet ist und beim dargestellten Ausführungsbeispiel U-förmig gestaltet ist. Die beiden Schenkel 24 des Vorkörpers 23 ragen teilweise über die Seitenflächen 20, 21 des Trägerkörpers 18 und liegen an diesem im wesentlichen an. Der die beiden Schenkel 24 verbindende Boden 25 des Vorkörpers 23 ist vorzugsweise der Strömung entgegengerichtet sphärisch ausgebildet. Der Vorkörper 23 kann bei dieser Ausführungsform mit den Schenkeln 24 an dem Trägerkörper 18 verklemmt und/oder verklebt sein. Als Material für den Vorkörper 23 sind Stoffe zu empfehlen, die auch von sich aus geeignet sind, Ablagerungen zu vermeiden. So könnte der Vorkörper z.B. aus Keramik, Glas, Kunststoff, Lack oder anderem bestehen. Der Vorkörper kann auch in einer anderen Ausführungsform aus dünnem Metallblech bestehen, das sich leicht in die U-Form biegen läßt.

In der Figur 3 ist ein zweites Ausführungsbeispiel der Luftmassenmeßvorrichtung in Teildarstellung gezeigt, bei dem die bisher verwendeten Bezugszeichen für die gleichbleibenden und gleichwirkenden Teile weiterverwendet wurden. Im Gegensatz zu dem Ausführungsbeispiel nach Figur 2, bei dem der Vorkörper 23 eine U-Form hat, ist bei dem Ausführungsbeispiel nach Figur 3 ein Vorkörper 27 dargestellt, der die Stirnfläche 19 des Trägerkörpers 18 überdeckt und nicht in Richtung der Seitenflächen 20, 21 ragt. Dabei kann der Vorkörper 27 natürlich auch in jeder Richtung etwas über die Stirnfläche 19 hinausragen. Der Vorkörper 27 ist der Strömungsrichtung 2 entgegengerichtet vorzugsweise ebenfalls sphärisch ausgebildet, so daß der Querschnitt des Vorkörpers 27 beispielsweise als Kreisabschnitt ausgebildet sein kann.

Durch die Anordnung des Vorkörpers 23, 27 an dem Trägerkörper 18 wird bereits im Neuzustand der Luftmassenmeßvorrichtung quasi ein Verschmutzungseffekt erzeugt, wie ihn in der Praxis nach einiger Betriebszeit Ablagerungen erzeugen, so daß bei der Eichung der Luftmassenmeßvorrichtung dieser Effekt praxisbezogen mitberücksichtigt werden kann.

Bei dem dritten Ausführungsbeipiel nach Figur 4 der Luftmassenmeßvorrichtung in Teildarstellung werden die gleichen Bezugszeichen für die gleichen und gleichwirkenden Teile wie bei den bisherigen Ausführungsbeispielen verwendet. Die Form des Vorkörpers 23 ist dabei im Querschnitt stromlinienförmig tropfenähnlich. Eine derartige Form ergibt sich kostengünstig durch Eintauchen der der Strömung entgegengrichteten Stirnfläche 19 des Trägerkörpers 18 in eine flüssige Kunststoff- bzw. Lackmasse und Erstarren lassen des nach dem Herausziehen aus der Masse am Trägerkörper 18 anhaftenden Materials.

Um eine Verschmutzungsempfindlichkeit des Vorkörpers 23, 27 aus Kunststoff bzw. Lack nach den Ausführungsbeispielen in den Figuren 2 bis 4 durch elektrostatische Aufladung zu vermeiden, kann es vorteilhaft sein, elektrisch-leitenden Kunststoff bzw. Lack zu verwenden. Zusätzlich kann ein Vorkörper 23, 27 aus diesem elektrisch-leitenden Kunststoff bzw. Lack mit der elektrischen Masseleitung 15 verbunden werden, wie in den einzelnen Figuren angedeutet ist. Hierfür kann, wie in Figur 4 beispielsweise dargestellt ist, auf wenigstens einer der Seitenflächen 20, 21 des Trägerkörpers 18 in der Nähe der Stirnfläche 19 eine Nulleiterschicht 32 aufgebracht sein, an der wenigstens einer der Schenkel des U-förmigen Vorkörpers 23 anliegt, und die mit der Masseleitung 15 verbunden ist.

## Ansprüche

1. Luftmassenmeßvorrichtung, insbesondere zur Messung der Ansaugluftmasse von Brennkraftmaschinen, mit wenigstens einem in einem Strömungsquerschnitt an einem Trägerkörper angeordneten und als Schicht ausgbildeten temperaturabhängigen Meßwiderstand, dadurch gekennzeichnet, daß an der der Strömung entgegengerichteten Stirnfläche (19) des Trägerkörpers (18) ein die Stirnfläche (19) überdeckender Vorkörper (23, 27) mit geringer Wandstärke angeordnet ist.

2. Luftmassenmeßvorrichtung nach Anspruch 1, dadurch gekennzeichnet, daß der Vorkörper (23) U-förmig ausgebildet ist und mit seinen Schenkeln (24) teilweise über parallel zur Strömungsrichtung (2) ausgerichtete Seitenflächen (20, 21) des plattenförmigen Trägerkörpers (18) ragt.

3. Luftmassenmeßvorrichtung nach Anspruch 1, dadurch gekennzeichnet, daß der Vorkörper (23, 27) der Strömung (2) entgegengerichtet sphärisch ausgebildet ist.

4. Luftmassenmeßvorrichtung nach Anspruch 2, dadurch gekennzeichnet, daß der Vorkörper (23) aus Blech ausgebildet ist.

5. Luftmassenmeßvorrichtung nach Anspruch 1 oder 2, dadurch gekennzeichnet, daß der Vorkörper (23, 27) aus Kunststoff bzw. Lack ausgebildet ist.

6. Luftmassenmeßvorrichtung nach Anspruch 1 oder 2, dadurch gekennzeichnet, daß der Vorkörper (23, 27) aus elektrisch-leitendem Kunststoff bzw. Lack ausgebildet ist.

7. Luftmassenmeßvorrichtung nach Anspruch 6, dadurch gekennzeichnet, daß der Vorkörper (23, 27) mit einer elektrischen Masseleitung (15) verbunden ist.

8. Verfahren zur Herstellung einer Luftmassenmeßvorrichtung, bei der in einem Verfahrensschritt auf einen Trägerkörper wenigstens eine als temperaturabhängiger Meßwiderstand dienende Schicht aufgebracht wird, insbesondere zur Herstellung einer Luftmassenmeßvorrichtung nach einem der Ansprüche 1, 2, 3, 5, 6 oder 7, dadurch gekennzeichnet, daß in einem weiteren Verfahrensschritt der Trägerkörper (18) mit einer der Luftströmung entgegenzurichtenden Stirnfläche (19) zur Bildung eines tropfenförmigen Vorkörpers (23, 27) in eine flüssige Kunststoffmasse bzw. Lackmasse eingetaucht und anschließend herausgezogen wird.

9. Verfahren nach Anspruch 8, dadurch gekennzeichnet, daß der den Vorkörper (23, 27) bildende Kunststoff bzw. Lack elektrisch-leitend und mit einer elektrischen Masseleitung (15) verbunden ist.

21615 IP

FIG. 1

FIG. 2

FIG. 3

FIG. 4

| | EINSCHLÄGIGE DOKUMENTE | | EP 88121334.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | DE - A1 - 2 751 196 (BOSCH) <br><br> * Fig. 1,2; Seite 4, letzter Absatz - Seite 5, 1. Absatz * <br><br> -- | 1-3 | G 01 F 1/68 <br><br> G 01 P 5/12 | |
| A | DE - A1 - 2 900 210 (BOSCH) <br><br> * Fig. 2; Zusammenfassung * <br><br> -- | 1-3 | | |
| A | DE - A1 - 3 135 793 (BOSCH) <br><br> * Fig. 2; Seite 10 * <br><br> -- | 1-3 | | |
| A | US - A - 4 448 070 (OHYAMA et al.) <br><br> * Fig. 9 * <br><br> -- | 1,2 | | |
| A | DE - A1 - 3 623 109 (NIPPON DENSO) <br><br> * Fig. 1a-1c; Spalte 5, Zeilen 46-49 * <br><br> -- | 1,4 | RECHERCHIERTE SACHGEBIETE (Int. Cl.4) | |
| A | DE - A1 - 2 900 200 (BOSCH) <br><br> * Fig. 2; Seite 9 * <br><br> ---- | 1,5 | G 01 F 1/00 <br> G 01 P 5/00 | |

Der vorliegende Recherchenbericht wurde für alle Patentansprüche erstellt.

| Recherchenort | Abschlußdatum der Recherche | Prüfer |
|---|---|---|
| WIEN | 05-04-1989 | BURGHARDT |